# EUROPEAN PATENT SPECIFICATION

(11) **EP 4 491 289 B1**
(45) Date of publication and mention of the grant of the patent: **18.02.2026**
(21) Application number: 23185030.6
(22) Date of filing: 12.07.2023
(51) Int. Cl.: B06B 1/10

(54) **TRIM EXCITATION DEVICE**
TRIMMERREGUNGSVORRICHTUNG
DISPOSITIF DE REGLAGE D'EXCITATION

(43) Date of publication of application: 15.01.2025
(73) Proprietor: Stichting Koninklijk Nederlands Lucht- en Ruimtevaartcentrum, 1059 CM Amsterdam (NL)
(72) Inventor: KASIEMKHAN, Shafeeq Ali, 8219 AC Lelystad (NL); VAN VILSTEREN, Jelmer Gerhard, 8042 CJ Zwolle (NL); VAN DER POST, Casimir Corstiaan Wijbrand, 1016 PA Amsterdam (NL)
(74) Representative: De Vries & Metman

(56) References cited:
- CN-A- 114 076 663
- JP-A- 2014 178 189
- US-A1- 2011 041 617

## Description

The invention relates to a trim excitation device, comprising a rotatable drive shaft, an eccentric drive pin mounted eccentrically on said drive shaft, which eccentric drive pin engages a drive channel of a transfer member and is movable back and forth in said drive channel in the direction of a drive channel axis, wherein the transfer member is connected to a first end of a link member of which an opposite second end, directly or indirectly, can be connected to an object to be excited, and wherein the link member defines a longitudinal direction extending between its first and second ends, wherein the transfer member by means of a guiding mechanism is movable back-and-forth in a direction substantially perpendicular to the drive channel axis.

By means of such a trim excitation device a rotational movement of the eccentric pin is transformed into a substantially linear back-and-forth movement of the link member which is transferred to the object.

US 2011/0041617 A1 discloses a base excitation testing system using spring elements to pivotally mount wind turbine blades.

It is an object to provide an improved trim excitation device of such a type.

Thus, in accordance with the present invention, the trim excitation device is characterized in that the guiding mechanism and transfer member are rotatable for assuming a desired rotational position between and including a first rotational position in which the drive channel axis extends substantially perpendicularly to the longitudinal direction of the link member and in which the transfer member by means of the guiding mechanism is movable back-and-forth substantially in the longitudinal direction of the link member, and a second rotational position in which the drive channel axis extends substantially in the longitudinal direction of the link member and in which the transfer member by means of the guiding mechanism is movable back-and-forth substantially perpendicularly to the longitudinal direction of the link member.

In the first rotational position of the guiding mechanism and transfer member, the rotation of the eccentric drive pin causes the transfer member to move back-and-forth in the longitudinal direction of the link member which, as a result, also will move longitudinally. This will lead to a corresponding excitation of the object. In the second rotational position of the guiding mechanism and transfer member however, the rotation of the eccentric drive pin causes the transfer member to move back-and-forth substantially perpendicularly to the longitudinal direction of the link member which, as a result, at its first end will move laterally without any substantial longitudinal movement of the link member. Thus, in said second rotational position the object will not be excited.

In positions between the first and second rotational positions the object will be excited in an amount between zero excitation and maximum excitation, depending on the rotational position of the guiding mechanism and transfer member.

Thus, by choosing the rotational position (for example the angle of rotation starting from the first rotational position), the magnitude of the excitation may be selected.

In one embodiment, the guiding mechanism and the transfer member are mounted on a disc member which is mounted rotatably in a stationary support. This makes the process of rotating the guiding assembly and transfer member easy.

It is conceivable that the disc member (and thus the transfer member), for assuming a desired rotational position, is driven by a drive actuator.

For example, in one embodiment, the disc member is provided with a circumferential toothing, wherein the drive actuator includes a drive gear mounted on the stationary support, for example a drive gear driven by an electric motor, engaging the toothing. Activation of the drive gear then will lead to the required rotation of the disc member (and thus a corresponding rotation of the guiding assembly and transfer member) towards a desired new rotational position which corresponds with a required amount of excitation.

As an alternative the disc member may be biased towards one of its first and second rotational positions, wherein the drive actuator includes a drive cable or similar member, for example driven by a linear actuator, attached to the disc member for moving it towards the other of its first and second rotational positions (or any intermediate rotational position).

The guiding mechanism may be a mechanical guide. However, for limiting or altogether preventing any hysteresis effect, in one embodiment the guiding mechanism includes a spring assembly to which the transfer member is attached, and which only allows said back-and-forth movement of the transfer member in said direction substantially perpendicular to the drive channel axis. Such a spring assembly, for example, may comprise a spring with spring parts extending in a zig-zag manner.

In one embodiment of the trim excitation device according to the present invention, the spring assembly carries a hub, wherein the transfer member is provided with a transfer member pin engaging in the hub. Thus, the transfer member in a constructively convenient manner is connected to the spring member.

In such an embodiment it further is conceivable that also the first end of the link member is connected to the transfer member pin. As a result, the link member is securely connected to the transfer member, such that any movement of latter is transferred to the link member. It is conceivable, for example, that the transfer member pin not only engages the hub, but also engages one (or more) holes in the link member.

In one embodiment, the disc member and transfer member are provided with an assembly of cooperating pin and elongated slot for transferring a rotational movement of the disc to the transfer member while allowing a back-and-forth movement of the transfer member relative to the disc member. Of course, it is required that a rotation of the disc member (for rotating the guiding assembly) should be accompanied by a corresponding rotation of the transfer member. The use of a pin and elongated slot achieves this goal, whereas specifically the use of the elongated slot allows a limited sliding motion of the pin in the elongated slot when the transfer member (as a result of a rotation of the eccentric drive pin) moves back-and-forth (which motion will occur relative to the disc member).

In a specific embodiment the disc member is provided with the pin, whereas the transfer member is provided with the elongated slot.

In one embodiment of the trim excitation device according to the present invention the second end of the link member is connected to a first end of a pivot arm that extends non parallel to the longitudinal direction of the link member, preferably substantially perpendicularly thereto, and that has a second end to be connected, directly or indirectly, to the object to be excited and that pivots around a pivot axis, wherein the position of the pivot axis is adjustable.

Apart from allowing to choose an amount of excitation by means of an appropriate choice of the rotational position of the guiding assembly and transfer member, an adjustment of the position of the pivot axis allows to choose the starting point of such an excitation, or in other words allows a trimming operation.

Specifically, it is conceivable that the position of the pivot axis of the pivot arm is adjustable in a direction substantially in parallel to the longitudinal direction of the link member (optimizing the effect of such an adjustment), wherein preferably the position of the pivot axis is adjustable by means of a trim motor, for example an electric trim motor.

In such an embodiment it is possible that the second end of the pivot arm is connected to an output link to be connected to the object to be excited. But it is possible too, that the pivot arm is directly connected to the object.

By changing the rotational position of the guiding assembly and transfer member as described above, the amount of excitation may be varied between zero and a maximum value. Said maximum value, mainly, is determined by the eccentricity of the eccentric drive pin. Thus, in an embodiment in which the eccentricity of the eccentric drive pin is adjustable and/or wherein the eccentric drive pin can be replaced by an eccentric drive pin with a different eccentricity, the maximum amount of excitation achievable may be changed.

The trim excitation device according to the present invention may be used in situations in which the object to be excited is (a scale model of) an aeronautical part, such as a rotor blade of a helicopter, and which, for example has to be tested in a wind tunnel. According to one state of the art, hydraulic actuators were used for such an application, which however lack sufficient precision, and which are often very large, heavy, and cumbersome and have a limited operating range. The present trim excitation device, however, is of a very lightweight construction, has an extended operating range, is very precise, and is very reliable and allows to easily change a number of characteristics of the excitation (among which frequency, amplitude, and trim, i.e. setting the maximum/zero value). It further has the advantage of offering an excitation with a sinus shape.

Hereinafter the invention will be elucidated while referring to the drawings, in which:
Figures 1 and 2 show different frontal views of a trim excitation device according to the invention;
Figures 3 and 4 show perspective exploded views from opposite sides of part of the trim excitation device;
Figure 5 shows different views of a transfer member;
Figure 6 shows a disc member, and
Figures 7 and 8 schematically illustrate a disc member with transfer member in different rotational positions for explaining the operation of the device.

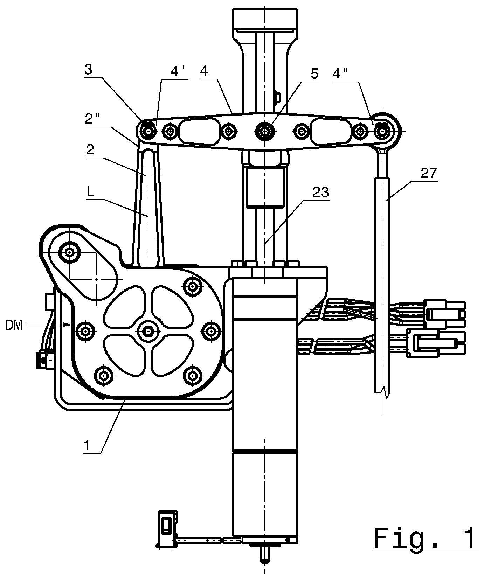

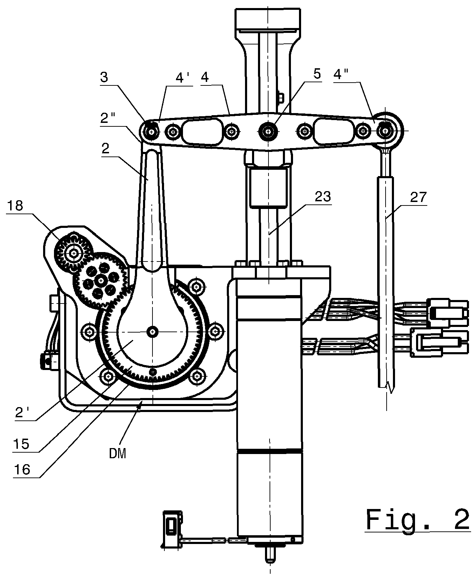

Referring firstly to figures 1 and 2, a frontal view of an embodiment of a trim excitation device in accordance with the present invention is illustrated, wherein figure 1 illustrates said device in an operative state with a cover 1 on a part of said device, whereas in the illustration according to figure 2 said cover 1 has been removed for showing some interior parts of the device.

An important part of the device is defined by a drive module DM which will be explained in more detail later while referring to the remaining figures and which, essentially, is used for driving a link member 2 which has a first end 2' cooperating with the drive module DM and which has a second end 2" connected (e.g. by means of a first pivot 3) to a first end 4' of a pivot arm 4. The pivot arm 4 is mounted for a pivotal motion around a pivot axis 5. An opposite second end 4" of the pivot arm 4 may, directly or indirectly (using any kind of appropriate connecting member not illustrated) be connected to an object to be excited by the trim excitation device.

In operation the drive module DM of the device is capable of moving the link member 2 back-and-forth in a longitudinal direction L of the link member 2 (or substantially in such a direction). Such a back-and-forth movement of the link member 2 will result in a pivotal back-and-forth movement of the pivot arm 4 around the pivot axis 5, and this in turn will lead to a corresponding back-and-forth (or up-and-down) movement of the second end 4" of the pivot arm 4 and, finally, to an excitation of the object to be excited.

Other details of the device illustrated in figures 1 and 2 will be described at a later stage.

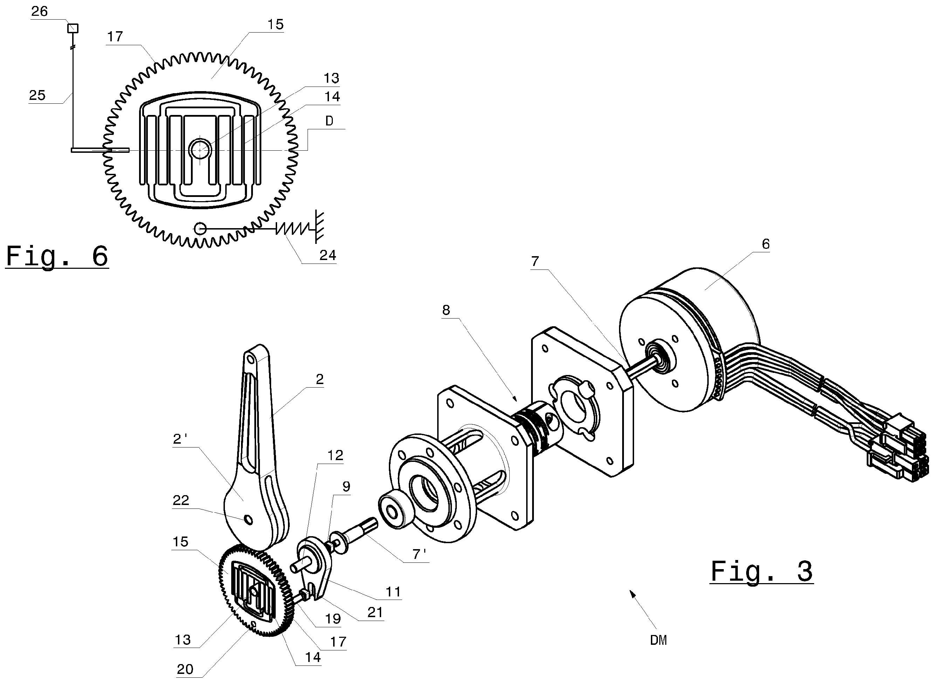

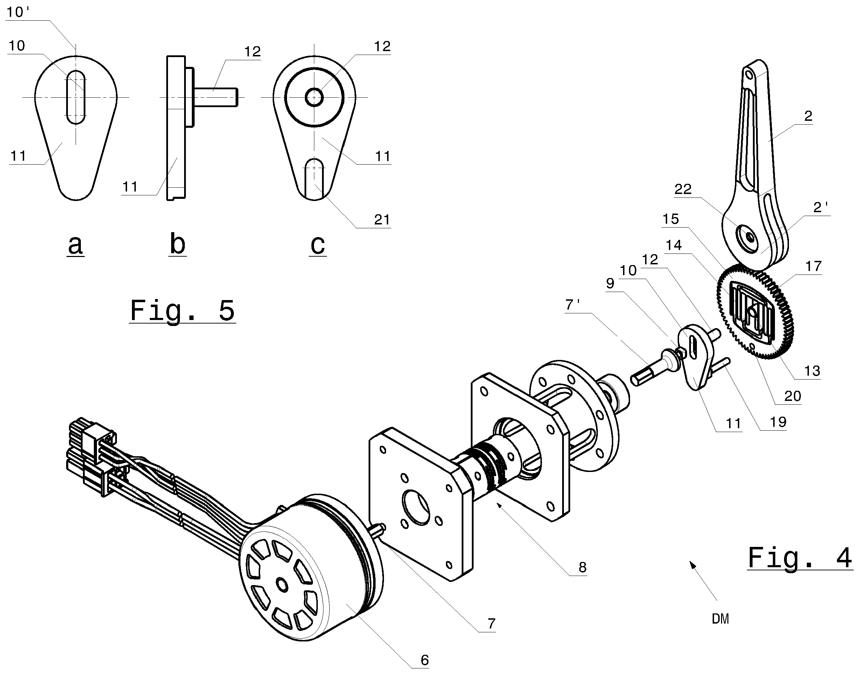

Figures 3 and 4 show perspective exploded views from opposite sides of the drive module DM illustrating its major parts. Only those parts which are essential for understanding the merits of the present invention will be elucidated hereafter. Basically, figure 3 is a perspective view from a frontal side corresponding with the view of figures 1 and 2.

The device comprises a drive source, here an electric motor 6, for a drive shaft 7 with a forward end 7'. The drive shaft 7 and its forward end 7' may be integrally connected, but also (as illustrated) may be connected by any appropriate mechanism, for example including a coupling 8. Hereinafter only reference will be made to the drive shaft 7 but this also may be its forward end 7'.

Mounted on the drive shaft is an eccentric drive pin 9 (which thus is positioned eccentrically with respect to the drive shaft 7). The drive pin 9 engages/cooperates with a drive channel 10 (not visible in figure 3) provided in one side of a transfer member 11 (which also is illustrated in three different views in figures 5 a-c). The drive channel 10 defines a drive channel axis 10'.

The transfer member 11 at the opposite side is provided with a protruding transfer member pin 12 which is intended to be received into a hub 13 which is carried by a spring assembly 14. As appears more clearly in figure 6, the spring assembly 14 is mounted in a disc member 15. The spring assembly 14 (which in the illustrated embodiment has a zig-zag shape) is designed in such a manner that the hub 13 is allowed to move back-and-forth only in one direction D, see figure 6 (and as such the spring assembly 14 defines a guiding mechanism for the hub and, as will appear later, for the transfer member 11).

Once again referring to figure 2, one can see that the disc member 15 is mounted in a stationary support, or housing, 16. Specifically, the disc member 15 is mounted for a rotation (substantially around an axis which coincides with the hub 13) within the stationary support 16. For initiating such a rotation, the disc member 15 comprises an external or circumferential toothing 17 in which a drive gear 18 engages that is mounted onto the stationary support 16 and which is driven by any appropriate source, for example an electric motor (not illustrated).

A pin 19 is provided which, at a hole 20, will be mounted on the disc member 15 and which is meant to engage an elongated slot 21 provided on the transfer member 11.

Figures 3 and 4 finally show the link member 2 of which the (lower) first end 2' is forked and is provided with a through-hole 22. In an assembled state of the drive module DM the forked first end 2' of the link member 2 straddles the disc member 15 in such a manner that the through-hole 22 coincides with the hub 13, and the transfer member pin 12 extends through the through-hole 22 and the hub 13. As a result, the transfer member 11 and the link member 2 are connected to the hub and to each other. This means that a movement of the transfer member 11 as allowed by a movement of the hub 13 within the spring assembly 14 will also occur with respect to the link member 2.

As stated above, the disc member 15 can rotate within the stationary support 16. Such a rotation will be transferred to the transfer member 11 through the cooperation between the pin 19 and the elongated slot 21.

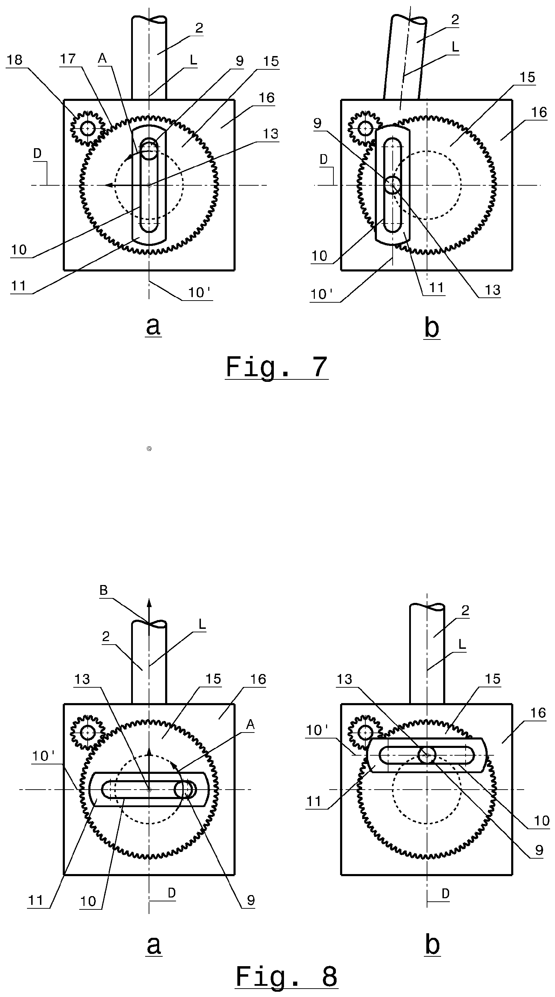

For explaining the operation of the trim excitation device, and specifically its drive module DM, reference is made to figures 7 and 8 in which some parts of the drive module are illustrated schematically.

These figures illustrate the stationary support 16 having mounted therein the rotatable disc member 15. From this disc member 15 only the hub 13 is shown in detail, but it should be kept in mind that the hub 13 is mounted in the spring assembly, such that only a back-and-forth movement of the hub 13 in direction D is allowed. Further the transfer member 11 with its drive channel 10 (and the drive channel axis 10' thereof) are shown. The figures further show the eccentric drive pin 9 that engages in the drive channel 10, part of the link member 2 with its longitudinal axis L, and (only illustrated in figure 7a) the drive gear 18 engaging the circumferential toothing 17 of the disc member 15.

In figure 7 the disc member 15 assumes a rotational position in which the drive channel axis 10' of the drive channel 10 of the transfer member 11 extends substantially in the longitudinal direction L of the link member 2. In this rotational position the spring assembly (not illustrated) only allows a back-and-forth movement of the hub 13 (and thus of the transfer member 11 and first end 2' of the link member 2 which are connected to the hub by pin 19) in direction D which now is perpendicularly to the longitudinal direction L of the link member 2. Thus, when the eccentric drive pin 9 is rotated around the drive shaft 7 (according to arrow A in figure 7a) the transfer member 11 (and hub 13 and link member 2) will move only along direction D (for example initially to the position in figure 7b) and no substantial longitudinal movement of the link member 2 is caused. The object, in such a position, will not be excited despite an ongoing circular movement of the eccentric drive pin 9.

In figure 8 the disc member 15 assumes a rotational position in which the drive channel axis 10' of the drive channel 10 of the transfer member 11 extends substantially perpendicularly to the longitudinal direction L of the link member 2. In this rotational position the spring assembly (not illustrated) again only allows a back-and-forth movement of the hub 13 (and thus of the transfer member 11 and first end 2' of the link member 2 which are connected to the hub by pin 19) in direction D which now coincides with (or at least extends parallel to) the longitudinal direction L of the link member 2. Thus, when the eccentric drive pin 9 is rotated around the drive shaft 7 (according to arrow A in figure 8a) the transfer member 11 (and hub 13 and link member 2) will move only along direction D (for example initially to the position in figure 8b) and a corresponding longitudinal movement of the link member 2 is caused (arrow B in figure 8a). The object, in such a position, will be excited during an ongoing circular movement of the eccentric drive pin 9.

In positions between the rotational positions of figures 7 and 8 only a limited excitation will occur, which will increase starting from the position in figure 7 (no excitation) towards the position in figure 8 (maximum excitation).

The rotation of the disc member 15 (and thus of the transfer member 11) for changing the excitation amplitude may occur during an ongoing excitation without the need for stopping the device. The excitation frequency may be changed by changing the rotational velocity of the electric motor 6.

Referring to figures 1 and 2, one can see that the pivot axis 5 of the pivot arm 4 is mounted on a linear actuator, for example an electric trim motor 23. By changing the position of the pivot axis 5 using the actuator 23 the device may be trimmed (this means that the end positions of the excitation may be changed). This also may occur without the need to stop the device.

The invention is not limited to the embodiments described which may be varied widely within the scope of the invention as defined by the appending claims. For example, referring to figure 6, the disc member 15 as an alternative to the toothing 17 cooperating with the drive gear 18 (as shown in figure 7a) may be biased towards one of its first and second rotational positions (for example by a spring 24), wherein the drive actuator includes a drive cable 25 or similar member, for example driven by a linear actuator 26, attached to the disc member 15 for moving it towards the other of its first and second rotational positions. Finally, figure 2 shows an output link 27 which may be used to connect the pivot arm 4 with an object to be excited.

## Claims

1. Trim excitation device, comprising a rotatable drive shaft (7), an eccentric drive pin (9) mounted eccentrically on said drive shaft, which eccentric drive pin engages a drive channel (10) of a transfer member (11) and is movable back and forth in said drive channel in the direction of a drive channel axis (10'), wherein the transfer member is connected to a first end (2') of a link member (2) of which an opposite second end (2"), directly or indirectly, can be connected to an object to be excited, and wherein the link member defines a longitudinal direction (L) extending between its first and second ends, wherein the transfer member by means of a guiding mechanism (14) is movable back-and-forth in a direction substantially perpendicular to the drive channel axis, **characterized in that** the guiding mechanism (14) and transfer member (11) are rotatable for assuming a desired rotational position between and including a first rotational position in which the drive channel axis (10') extends substantially perpendicularly to the longitudinal direction (L) of the link member (2) and in which the transfer member by means of the guiding mechanism is movable back-and-forth substantially in the longitudinal direction of the link member, and a second rotational position in which the drive channel axis (10') extends substantially in the longitudinal direction (L) of the link member (2) and in which the transfer member by means of the guiding mechanism is movable back-and-forth substantially perpendicularly to the longitudinal direction of the link member.

2. Trim excitation device according to claim 1, wherein the guiding mechanism (14) and the transfer member (11) are mounted on a disc member (15) which is mounted rotatably in a stationary support (16).

3. Trim excitation device according to claim 2, wherein the disc member (15), for assuming a desired rotational position, is driven by a drive actuator (18).

4. Trim excitation device according to claim 3, wherein the disc member (15) is provided with a circumferential toothing (17) and wherein the drive actuator includes a drive gear (18) mounted on the stationary support (16), for example a drive gear driven by an electric motor, engaging the toothing.

5. Trim excitation device according to claim 3, wherein the disc member (15) is biased towards one of its first and second rotational positions and wherein the drive actuator includes a drive cable (25) or similar member, for example driven by a linear actuator (26), attached to the disc member for moving it towards the other of its first and second rotational positions.

6. Trim excitation device according to any of the previous claims, wherein the guiding mechanism includes a spring assembly (14) to which the transfer member (11) is attached, and which only allows said back-and-forth movement of the transfer member in said direction (D) substantially perpendicular to the drive channel axis (10').

7. Trim excitation device according to claim 6, wherein the spring assembly (14) carries a hub (13) and wherein the transfer member is provided with a transfer member pin (12) engaging in the hub.

8. Trim excitation device according to claim 7, wherein the first end (2') of the link member (2) is connected to the transfer member pin (12).

9. Trim excitation device according to any of the claims 2-8, wherein the disc member (15) and transfer member (11) are provided with an assembly of cooperating pin (19) and elongated slot (21) for transferring a rotational movement of the disc member (15) to the transfer member (11) while allowing a back-and-forth movement of the transfer member relative to the disc member.

10. Trim excitation device according to claim 9, wherein the disc member (15) is provided with the pin (19), whereas the transfer member (11) is provided with the elongated slot (21).

11. Trim excitation device according to any of the previous claims, wherein the second end (2") of the link member (2) is connected to a first end (4') of a pivot arm (4) that extends non parallel to the longitudinal direction (L) of the link member (2), preferably substantially perpendicularly thereto, and that has a second end (4") to be connected, directly or indirectly, to the object to be excited and that pivots around a pivot axis (5), wherein the position of the pivot axis is adjustable.

12. Trim excitation device according to claim 11, wherein the position of the pivot axis (5) of the pivot arm (4) is adjustable in a direction substantially in parallel to the longitudinal direction (L) of the link member (2), wherein preferably the position of the pivot axis is adjustable by means of a trim motor (26), for example an electric trim motor.

13. Trim excitation device according to claim 11 or 12, wherein the second end (4") of the pivot arm (4) is connected to an output link (27) to be connected to the object to be excited.

14. Trim excitation device according to any of the previous claims, wherein the eccentricity of the eccentric drive pin (9) is adjustable and/or wherein the eccentric drive pin can be replaced by an eccentric drive pin with a different eccentricity.

15. Trim excitation device according to any of the previous claims, wherein the object to be excited is an aeronautical part, such as a rotor blade of a helicopter.

## Patentansprüche

1. Trimmungsansteuerungsvorrichtung, aufweisend eine drehbare Antriebswelle (7), einen exzentrischen Antriebsstift (9), der exzentrisch an der Antriebswelle angebracht ist, wobei der exzentrische Antriebsstift mit einem Antriebskanal (10) eines Übertragungselements (11) im Eingriff ist und in dem Antriebskanal in Richtung von einer Antriebskanalachse (10') hin und her bewegbar ist, wobei das Übertragungselement mit einem ersten Ende (2') eines Verbindungselements (2) verbunden ist, dessen entgegengesetztes zweites Ende (2") direkt oder indirekt mit einem anzusteuernden Objekt verbunden werden kann, und wobei das Verbindungselement eine Längsrichtung (L) definiert, die sich zwischen seinem ersten und zweiten Ende erstreckt, wobei das Übertragungselement mittels eines Führungsmechanismus (14) in einer Richtung im Wesentlichen senkrecht zur Antriebskanalachse hin und her bewegbar ist, **dadurch gekennzeichnet, dass** der Führungsmechanismus (14) und das Übertragungselement (11) drehbar sind, um eine gewünschte Drehposition einzunehmen zwischen und einschließlich einer ersten Drehposition, in der sich die Antriebskanalachse (10') im Wesentlichen senkrecht zur Längsrichtung (L) des Verbindungselements (2) erstreckt und in der das Übertragungselement mittels des Führungsmechanismus im Wesentlichen in Längsrichtung des Verbindungselements hin und her bewegbar ist, und einer zweiten Drehposition, in der sich die Antriebskanalachse (10') im Wesentlichen in Längsrichtung (L) des Verbindungselements (2) erstreckt und in der das Übertragungselement mittels des Führungsmechanismus im Wesentlichen senkrecht zur Längsrichtung des Verbindungselements hin und her bewegbar ist.

2. Trimmungsansteuerungsvorrichtung nach Anspruch 1, wobei der Führungsmechanismus (14) und das Übertragungselement (11) an einem Scheibenelement (15) angebracht sind, das drehbar in einer stationären Halterung (16) angebracht ist.

3. Trimmungsansteuerungsvorrichtung nach Anspruch 2, wobei das Scheibenelement (15) zum Einnehmen einer gewünschten Drehposition von einem Antriebsaktuator (18) angetrieben wird.

4. Trimmungsansteuerungsvorrichtung nach Anspruch 3, wobei das Scheibenelement (15) mit einer Umfangsverzahnung (17) versehen ist und wobei der Antriebsaktuator ein Antriebszahnrad (18) aufweist, das an der stationären Halterung (16) angebracht ist, beispielsweise ein Antriebszahnrad, das von einem Elektromotor angetrieben wird, und das mit der Verzahnung im Eingriff ist.

5. Trimmungsansteuerungsvorrichtung nach Anspruch 3, wobei das Scheibenelement (15) in Richtung zu einer von seiner ersten und zweiten Drehpositionen vorgespannt ist und wobei der Antriebsaktuator ein Antriebsseil (25) oder ein ähnliches Element aufweist, das beispielsweise von einem Linearaktuator (26) angetrieben wird und das an dem Scheibenelement angebracht ist, um dieses in Richtung zu der anderen von dessen erster und zweiter Drehpositionen zu bewegen.

6. Trimmungsansteuerungsvorrichtung nach einem der vorhergehenden Ansprüche, wobei der Führungsmechanismus eine Federeinrichtung (14) aufweist, an der das Übertragungselement (11) angebracht ist und die nur die Hin- und Her-Bewegung des Übertragungselements in der Richtung (D) im Wesentlichen senkrecht zur Antriebskanalachse (10') zulässt.

7. Trimmungsansteuerungsvorrichtung nach Anspruch 6, wobei die Federeinrichtung (14) eine Nabe (13) trägt und wobei das Übertragungselement mit einem Übertragungselementstift (12) versehen ist, der mit der Nabe im Eingriff ist.

8. Trimmungsansteuerungsvorrichtung nach Anspruch 7, wobei das erste Ende (2') des Verbindungselements (2) mit dem Übertragungselementstift (12) verbunden ist.

9. Trimmungsansteuerungsvorrichtung nach einem der Ansprüche 2-8, wobei das Scheibenelement (15) und das Übertragungselement (11) mit einer Einrichtung aus einem zusammenwirkenden Stift (19) und einem länglichen Schlitz (21) versehen sind, um eine Drehbewegung des Scheibenelements (15) auf das Übertragungselement (11) zu übertragen, während sie eine Hin- und Her-Bewegung des Übertragungselements relativ zum Scheibenelement ermöglicht.

10. Trimmungsansteuerungsvorrichtung nach Anspruch 9, wobei das Scheibenelement (15) mit dem Stift (19) versehen ist, wobei das Übertragungselement (11) mit dem länglichen Schlitz (21) versehen ist.

11. Trimmungsansteuerungsvorrichtung nach einem der vorstehenden Ansprüche, wobei das zweite Ende (2") des Verbindungselements (2) mit einem ersten Ende (4') eines Schwenkarms (4) verbunden ist, der sich nicht-parallel zur Längsrichtung (L) des Verbindungselements (2) erstreckt, vorzugsweise im Wesentlichen senkrecht dazu, und der ein zweites Ende (4") hat, das direkt oder indirekt mit dem anzusteuernden Objekt verbunden werden soll, und der um eine Schwenkachse (5) schwenkt, wobei die Position der Schwenkachse einstellbar ist.

12. Trimmansteuerungsvorrichtung nach Anspruch 11, wobei die Position der Schwenkachse (5) des Schwenkarms (4) in einer Richtung im Wesentlichen parallel zur Längsrichtung (L) des Verbindungselements (2) einstellbar ist, wobei vorzugsweise die Position der Schwenkachse mittels eines Trimmmotors (26), beispielsweise eines elektrischen Trimmmotors, einstellbar ist.

13. Trimmungsansteuerungsvorrichtung nach Anspruch 11 oder 12, wobei das zweite Ende (4") des Schwenkarms (4) mit einem Ausgangsglied (27) verbunden ist, das mit dem anzusteuernden Objekt verbunden werden soll.

14. Trimmungsansteuerungsvorrichtung nach einem der vorstehenden Ansprüche, wobei die Exzentrizität des exzentrischen Antriebsstifts (9) einstellbar ist und/oder wobei der exzentrische Antriebsstift durch einen exzentrischen Antriebsstift mit einer unterschiedlichen Exzentrizität ersetzt werden kann.

15. Trimmungsansteuerungsvorrichtung nach einem der vorstehenden Ansprüche, wobei das anzusteuernde Objekt ein Luftfahrtteil ist, beispielsweise ein Rotorblatt eines Hubschraubers.

## Revendications

1. Dispositif d'excitation de compensation, comprenant un arbre d'entraînement rotatif (7), une goupille d'entraînement excentrique (9) montée excentriquement sur ledit arbre d'entraînement, laquelle goupille d'entraînement excentrique vient en prise dans un canal d'entraînement (10) d'un organe de transfert (11) et est mobile d'avant en arrière dans ledit canal d'entraînement dans la direction d'un axe de canal d'entraînement (10'), dans lequel l'organe de transfert est relié à une première extrémité (2') d'un organe de liaison (2) dont une seconde extrémité opposée (2") peut être reliée, directement ou indirectement, à un objet à exciter, et dans lequel l'organe de liaison définit une direction longitudinale (L) s'étendant entre ses première et seconde extrémités, dans lequel l'organe de transfert est mobile d'avant en arrière au moyen d'un mécanisme de guidage (14) dans une direction sensiblement perpendiculaire à l'axe de canal d'entraînement, **caractérisé en ce que** le mécanisme de guidage (14) et l'organe de transfert (11) peuvent tourner pour adopter une position de rotation souhaitée entre, et incluant, une première position de rotation dans laquelle l'axe de canal d'entraînement (10') s'étend sensiblement perpendiculairement à la direction longitudinale (L) de l'organe de liaison (2) et dans laquelle l'organe de transfert est mobile d'avant en arrière au moyen du mécanisme de guidage sensiblement dans la direction longitudinale de l'organe de liaison, et une seconde position de rotation dans laquelle l'axe de canal d'entraînement (10') s'étend sensiblement dans la direction longitudinale (L) de l'organe de liaison (2) et dans laquelle l'organe de transfert est mobile d'avant en arrière au moyen du mécanisme de guidage sensiblement perpendiculairement à la direction longitudinale de l'organe de liaison.

2. Dispositif d'excitation de compensation selon la revendication 1, dans lequel le mécanisme de guidage (14) et l'organe de transfert (11) sont montés sur un organe de disque (15) qui est monté en rotation dans un support fixe (16).

3. Dispositif d'excitation de compensation selon la revendication 2, dans lequel l'organe de disque (15), pour adopter une position de rotation souhaitée, est entraîné par un actionneur d'entraînement (18).

4. Dispositif d'excitation de compensation selon la revendication 3, dans lequel l'organe de disque (15) est pourvu d'une denture circonférentielle (17) et dans lequel l'actionneur d'entraînement comporte un pignon d'entraînement (18) monté sur le support fixe (16), par exemple un pignon d'entraînement entraîné par un moteur électrique, mettant en prise la denture.

5. Dispositif d'excitation de compensation selon la revendication 3, dans lequel l'organe de disque (15) est sollicité vers l'une de ses première et seconde positions de rotation et dans lequel l'actionneur d'entraînement comporte un câble d'entraînement (25) ou un organe similaire, par exemple entraîné par un actionneur linéaire (26), fixé à l'organe de disque pour le déplacer vers l'autre de ses première et seconde positions de rotation.

6. Dispositif d'excitation de compensation selon quelconque des revendications précédentes, dans lequel le mécanisme de guidage comporte un ensemble ressort (14) auquel est fixé l'organe de transfert (11), et qui permet uniquement ledit mouvement d'avant en arrière de l'organe de transfert dans ladite direction (D) sensiblement perpendiculaire à l'axe de canal d'entraînement (10').

7. Dispositif d'excitation de compensation selon la revendication 6, dans lequel l'ensemble ressort (14) porte un moyeu (13) et dans lequel l'organe de transfert est pourvu d'une goupille d'organe de transfert (12) venant en prise dans le moyeu.

8. Dispositif d'excitation de compensation selon la revendication 7, dans lequel la première extrémité (2') de l'organe de liaison (2) est reliée à la goupille d'organe de transfert (12).

9. Dispositif d'excitation de compensation selon quelconque des revendications 2 à 8, dans lequel l'organe de disque (15) et l'organe de transfert (11) sont pourvus d'un ensemble de goupille coopérative (19) et de fente allongée (21) pour transférer un mouvement de rotation de l'organe de disque (15) à l'organe de transfert (11) tout en permettant un mouvement d'avant en arrière de l'organe de transfert par rapport à l'organe de disque.

10. Dispositif d'excitation de compensation selon la revendication 9, dans lequel l'organe de disque (15) est pourvu de la goupille (19), tandis que l'organe de transfert (11) est pourvu de la fente allongée (21).

11. Dispositif d'excitation de compensation selon quelconque des revendications précédentes, dans lequel la seconde extrémité (2") de l'organe de liaison (2) est reliée à une première extrémité (4') d'un bras de pivotement (4) qui s'étend non pas parallèlement à la direction longitudinale (L) de l'organe de liaison (2), mais de préférence sensiblement perpendiculairement à celle-ci, et qui a une seconde extrémité (4") à raccorder, directement ou indirectement, à l'objet à exciter, et qui pivote autour d'un axe de pivotement (5), dans lequel la position de l'axe de pivotement est réglable.

12. Dispositif d'excitation de compensation selon la revendication 11, dans lequel la position de l'axe de pivotement (5) du bras de pivotement (4) est réglable dans une direction sensiblement parallèle à la direction longitudinale (L) de l'organe de liaison (2), dans lequel de préférence la position de l'axe de pivotement est réglable au moyen d'un moteur de compensation (26), par exemple un moteur de compensation électrique.

13. Dispositif d'excitation de compensation selon la revendication 11 ou 12, dans lequel la seconde extrémité (4'') du bras de pivotement (4) est reliée à une liaison de sortie (27) à connecter à l'objet à exciter.

14. Dispositif d'excitation de compensation selon quelconque des revendications précédentes, dans lequel l'excentricité de la goupille d'entraînement excentrique (9) est réglable et/ou dans lequel la goupille d'entraînement excentrique peut être remplacée par une goupille d'entraînement excentrique ayant une excentricité différente.

15. Dispositif d'excitation de compensation selon quelconque des revendications précédentes, dans lequel l'objet à exciter est une pièce aéronautique, telle qu'une pale de rotor d'un hélicoptère.
